# EUROPEAN PATENT APPLICATION

(11) **EP 2 301 996 A1**
(43) Date of publication of application: **30.03.2011**
(21) Application number: 08873591.5
(22) Date of filing: 24.03.2008
(51) Int. Cl.: C08L 17/00, C08J 11/06, C04B 26/26, C08L 95/00

(54) **MODIFYING COMPOSITION FOR ASPLALT-CONCRETE MIXTURES**

(71) Applicant: Obschestvo s ogranichennoy Otvetstvennostju "Unikom", Podolsk 142100 (RU)
(72) Inventor: GORELIK, Rudolf Abramovich, Moscow 117587 (RU); BALYBERDIN, Vladimir Nikolaevich, Moscow 105118 (RU); SLEPAIA, Bella Matveevna, Moscow 123100 (RU); LERNER, Mikhail Ilyich, Moscow 111402 (RU)
(74) Representative: Glawe, Delfs, Moll
(86) International application number: PCT/RU2008/000171
(87) International publication number: WO 2009/120104

(57) **Abstract**

The inventions relate to the field of road-building materials and the process of their production and can be applied to building of road surface, bridges, airfields, and hydraulic structures.

The object of the invention is to develop the modifying composition for various types or road concrete mixes, said composition being introduced into the road concrete mix directly during the preparation of said mix, which enhance the performance of various types of asphalt concretes on the basis of these mixes. Another object of the invention is to provide a process for preparation of modified asphalt concrete mixes.

The modifying composition comprises the active rubber powder with the particle size no more than 0.8mm and the specific surface area no less than 0.5m²/g produced through the thermomechanical pulverization of vulcanized rubber in the presence of antiagglomerator, selected from the group consisting of paraffin, ozokerite, and halogenated alcohol-telomers in amounts of 0.1-2% of the weight of vulcanized rubber. The composition comprises additionally metasilicate of a needle-shaped structure, the initiator of gelation selected from the group including 4-nitro-N-methylamine, N-methyl-N , 4-dinitrosoaniline, N-(2-methyl-2-nitropropyl)-4-nitrosoaniline, N-nitrosodiphenilamine, and at least one structurizing agent with the increased induction period of structurization selected from the group, including oligomeric epoxy ether resin, epoxy resin with reactive end groups, and polycondensation resin promoting the formation of branched or network structures, with the following component ratio, wt.%: active rubber powder 65-90; metasilicate of a needle-shaped structure 4.0-25.0; initiator of gelation 1.0-4.5; structurizing agent or structurizing agents 1.7-6.0.

The process for the preparation of the modified road concrete mix is accomplished by blending the constituents of the mineral component of a road concrete mix, namlely, crushed stone, sand, and mineral powder at a temperature of 140-150°C, with the subsequent addition of a bitumen heated up to 140-150°C. Simultaneously with the bitumen's addition or immediately after it said modifying composition is introduced at a temperature of 150-180°C in amounts of 0.32-3.5 wt.% of the weight of the mineral component of a road concrete mix.

## Description

The inventions relate to the field of road-building materials and the process of their production and can be applied to building of road surfaces, bridges, airfields, and hydraulic structures.

One of the most important structural members of roads is the bituminous concrete pavement, the demands on its quality being growing progressively. The growth of demands is caused by the runway of the automobile park, increase in vehicle capacity, and the shortcomings of the quality control systems of the roadwork in general, including the quality control of the source materials entering into the asphalt concrete composition.

To improve the quality of asphalt concretes, for many years in different countries the studies on searching for the modifiers enhancing the performance of asphalt concretes are carried out.

Said modifiers can be divided into the following groups:
1. Polymeric materials, namely, rubbers, latexes, rubber crumb, produced on utilization of waste of the mechanical rubber goods (MRG) and worn-out tires, thermoplastic elastomers, fluoroplastics, and some other polymeric additives.
2. Fibers, such as asbestos fibers, acrylics, cellulose fibers, polyamide fibers, and some others.
3. Chemical substances, namely, maleic anhydride, sulfenamide, diphenylguanidine, sulfur, and some others.

The common practice is the application of the combination of the above-listed modifiers («Methodological guidelines for the construction of asphalt concrete pavements with the usage of rubber powder», SOUTSDORNII, Moscow, 1976, pp. 5-8; RU 2218369 C2, 10.12.2003, C08L 95/00; RU 2223990 C2, 20.02.2004, C08L 95/00).

It is known that the addition of rubber powder to the road concrete mixes enhances the performance of asphalt concretes produced on the basics of these mixes («Paving asphalt concrete», edited by Prof. Gezenzvey L.B., «Trasport» publ. House, Moscow, 1985; Slepaya B.M., «The study of influence of rubber powder on properties of paving asphalt concrete», Balashikha, edited by SOUTSDORNII, 1972).

A rubber-containing polymeric modifier of bitumen is known comprising bitumen (47-62 wt.%), fuel oil (2-5 wt.%), crumb rubber (30-50 wt.%), secondary polyethylene (3-7 wt.%), and building lime (3-6 wt.%) (RU 2266934 C1, 27.12.2005, C08L 95/00). Said modifier promotes the creation of road pavements operating under the conditions of large drop of temperature.

The deficiency of said modifier is the necessity of its preliminary introduction into bitumen at high temperature and soaking over a rather long period of time. This procedure requires the installation of the additional equipment at the plants. Besides, the long-term heating of bitumen with rubber crumb favors the additional structurization of the latter that affects negatively on the wetting ability of bitumen, leading, in turn, to the increase in the water saturation of the surface course of the asphalt concrete and the depression of the parameter called «structural cohesion», the latter has a negative impact on the shear resistance of asphalt concrete pavement.

The closest prior art to the modifying composition of the invention is the modifying additive which is the constituent of the road concrete mix (RU 2196750 C1, 20.01.2003, C08L95/00). Said mix contains sand (16-20 wt.%), mineral powder (10-15 wt.%), siftings of crushed stone measuring 0-5 mm (57.0-68.2 wt.%), rubber thermoplastic elastomer (0.5-1.0 wt.%), oil viscous bitumen (5.0-6.5 wt.%), and wood-tar pitch (0.3-0.5 wt.%), the mixture of rubber thermoplastic elastomer, oil viscous bitumen, and wood-tar pitch serve herewith a purpose of modifying additive.

The disadvantage of said modifying additive is the necessity of premixing of bitumen with wood-tar pitch during it's preparation. Another disadvantages of said additive are the relatively low physical-mechanical properties of asphalt concretes produced on the basis of the road concrete mixtures including said modifier and, hence their poor performance, namely, relatively high ultimate strength on compression at the temperature of 0°C and low shear resistance (see Table 9).

A process for preparation of a road concrete mix is known according to which the preprepared modifier in a granular form is introduced into the heated bitumen, and afterwards said bitumen with said granules is, in turn, introduced into the road concrete mix (RU 2266934 C1, 27.12.2005, C08L 95/00).

The drawback of the said process lies in the fact that usage requires the modification of the road concrete mix production technology and, along with it, the application of the additional equipment for the preparation of the modified bitumen.

The most similar to the invention is the process for producing road concrete mix with the modifying additive (RU 2196750 C1, 20.01.2003, C08L95/00). Said road concrete mix contains sand (16-20 wt.%), mineral powder (10-15 wt.%), siftings of crushed stone measuring 0-5mm (57.0-68.2 wt.%), rubber thermoplastic elastomer (0.5-1.0 wt.%), oil viscous bitumen (5.0-6.5 wt.%), and wood-tar pitch (0.3-0.5 wt.%) (RU 2196750 C1, 20.01.2003, C08L 95/00). In the road concrete mix the combination of the rubber thermoplastic elastomer, oil viscous bitumen, and wood-tar pitch serve a purpose of modifying additive. The process for producing the road concrete mix comprises the mixing of mineral materials preheated up to a temperature of 150-160°C, sifting of crushed stone to the fraction 0-5 mm, sieving the sand, and the subsequent introduction of rubber thermoplastic elastomer. The mixture is thoroughly agitated for 1-2 minutes, then the mineral powder is introduced into the mixture and blended with it; afterwards the oil bitumen modified by wood-tar pitch beforehand and heated up to 150-160°C is added and the procedure of agitation repeats once again.

The deficiency of said process for producing the road concrete mix lies in the fact that the asphalt concrete produced this way, possesses poor performance. Another deficiency of said process is that its application requires the modification of the existing technique of the road concrete mixture production and the usage of the additional equipment as well.

The goal of the proposed inventions is the accomplishment of the technical benefit consisting in the development of a modifying composition for different types of road concrete mix, which can be introduced in the latter directly during their preparation and enhance the performance of asphalt concretes on the basis of said mixes as well as the development of the process for preparing same.

The modifying composition has therefore to satisfy the following demands.
1. A modifier has to possess a property of rapid enough dispersing in a bitumen, does not increase the duration of a mixture preparation and possess the possibility to be introduced into the road concrete mix in a wide quantitative range, in accordance with the quality of the used bitumen.
2. The introduction of modifier has to increase the wetting ability of a binder and its adhesion to the mineral component of a road concrete mix.
3. A modifier had to prolong substantially the duration of a bitumen aging; the latter has to bring about the increase in strength, frost resistance, the decrease in water receptivity and embrittlement of the asphalt concrete. All these factors would result in the long run in the increase in the service life of the pavements.
4. A system consisting of a modifiers and bitumen has to fall into the category of viscoelastic materials, for the higher value of the elastic component of a deformation process leads to better resistance of the asphalt concrete to cycling loadings and structural cohesion under its operating conditions and, hence, to sharp decrease in rutting.
5. A modifier has to be characterized by the absence of crumb rubber agglomeration during the preparation and the storage of a modifier.

The technical benefit is accomplished by the modifying composition for road concrete mixes comprising the pulverized vulcanized rubber. The distinctive property of the proposed composition lies in the fact that the composition comprises, as the pulverized vulcanized rubber, the active rubber powder with the particle size no more than 0.8 mm and the specific surface area no less than 0.5 m²/g produced through the thermomechanical pulverization of vulcanized rubber in the presence of antiagglomerator, selected from the group consisting of paraffin, ozokerite, and halogenated alcohol-telomers in amounts of 0.1-2.0% of the weight of vulcanized rubber. The composition comprises additionally metasilicate of a needle-shaped structure, the initiator of gelation selected from the group including 4-nitro-N-methylaniline, N-methyl-N, 4-dinitrosoaniline, N-(2-methyl-2-nitropropyl)-4-nitrosoaniline, N-nitrosodiphenilamine; the composition comprises also at least one structurizing agent with the increased induction period of structurization selected from the group, including oligomeric epoxy ether resin, epoxy resin with reactive end groups, polycondensation resin promoting the formation of branched or network structures, with the following component ratio, wt.%,

| | |
|---|---|
| active rubber powder | 65-90 |
| metasilicate of a needle-shaped structure | 4.0-25.0 |
| initiator of gelation | 1.0-4.5 |
| structurizing agent or structurizing agents | 1.7-6.0 |

In the present case the structurizing agent with the increased induction period is the particular structurizing agent which provides the absence of structurization of road concrete mix before the start of a roadway surfacing.

Specifically, the modifying composition can contain the rubber powder produced through thermomechanical grinding of the worn-out tires and the waste of mechanical rubber goods as an active rubber powder.

Specifically, the composition can contain the rubber powder produced through thermomechanical grinding of vulcanized rubber on the basis of the natural, isoprene, butadiene styrene, and ethylene-propylene rubbers as an active rubber powder.

Specifically, the composition can contain the rubber powder produced through thermomechanical grinding of vulcanized rubber in the presence of fluorine-containing alcohol-telomers which have the general structural formula H(CF₂CF₂)nCF₂OH, where n≥5, as an active rubber powder.

Specifically, the composition can contain a structurizing agent or structurizing agents with the induction period of structurization no less than 30 minutes at a temperature of 160°C as a structurizing agent with the increased induction period of structurization.

Specifically, the composition can contain the resin with a trade name «ARE» or «E-40» type as an oligomeric epoxy ether resin; it can also contain the resin of phenol-formaldehyde type as a polycondensation resin promoting the formation of branched or network structures.

The technical benefit is accomplished also by the process for preparation of a modified road concrete mix which comprises the mixing of crushed stone, sand and mineral powder at elevated temperature, and the introduction of bitumen and a modifying composition. The distinctive feature of the process is that the mineral components of a road concrete mix, namely, crushed stone, sand and mineral powder are blended initially at a temperature of 140-150°C, and only afterwards a bitumen heated up to 140-150°C is added to a mix; simultaneously with the bitumen's addition or immediately after it the modifying composition in amounts 0.32-3.5 wt.% of the weight of the mineral constituent of a road concrete mix is introduced at a temperature of 150-180°C. The composition consisting of the following components, is used herein as the modifying composition:
A) active rubber powder with the particle size no more than 0.8 mm and the specific surface area no less than 0.5m²/g produced through the thermomechanical pulverization of vulcanized rubber in the presence of antiagglomerator, selected from the including paraffin, ozokerite, and halogenated alcohol-telomers in amounts of 0.1%-2.0% of the weight of vulcanized rubber,
B) metasilicate of a needle-shaped structure,
C) initiator of gelation selected from the group, including 4-nitro-N-methylaniline, N-methyl-N,4-dinitrosoaniline, N-(2-methyl-2-nitropropyl)-4-nitrosoaniline, N-nitrosodiphenilamine,
D) al least one structurizing agent with the increased induction period of structurization selected from the group, including oligomeric epoxy ether resin, epoxy resin with reactive end groups, polycondensation resin promoting the formation of branched or network structures, with the following components ratio, wt.%,

| | |
|---|---|
| active rubber powder | 65-90 |
| metasilicate of a needle-shaped structure | 4.0-25.0 |
| initiator of gelation | 1.0-4.5 |
| structurizing agent or structurizing agents | 1.7-6.0 |

Specifically, in the process the modifying composition that contains an active rubber powder, produced through the thermomechanical grinding of the worn-out tires and the waste of mechanical rubber goods, can be used.

Specifically, in the process the modifying composition that contains an active rubber powder, produced through thermomechanical grindingof vulcanized rubber on the basis of natural, isoprene, butadiene styrene and ethylene-propylene rubbers, can be used.

Specifically, in the process the modifying composition that contains an active rubber powder, produced through the thermomechanical grinding of vulcanized rubber in the presence of fluorine-containing alcohol-telomers which have the general structural formula H(CF₂CF₂)nCF₂OH, where n≥5, can be used.

Specifically, in the process the modifying composition that contains a structurizing agent or structurizing agents with the induction period of structurization no less than 30 minutes at 160°C, can be used.

Specifically, in the process the modifying composition that contains as the oligomeric epoxy ether resin, the resin with a trade name «ARE» or «E-40» and the like, epoxy resin with the reactive end groups, trade name «ED-8», and the resin of phenol formaldehyde type as a polycondensation resin promoting the formation of branched or network structures, can be also used.

The various types of asphalt concretes produced with the use of a proposed modifying composition (modifier) were tested as well as the proposed process for preparation the modified road concrete mix. The technical characteristics and the field-performance data of said asphalt concretes were also evaluated.

The trials with the application of various types of bitumen, crushed stone, sand and mineral powder were conducted on kerns of roads concrete mixes of «A» and «B» types (GOST 9128-97), stone mastic asphalt concrete (SMA), and poured asphalt concrete, in Russian Federation, namely, in the Laboratory of road building, «NII Mosstroy», Moscow. In addition, the trials of the proposed modifier and the process of preparation of a road concrete mix in accordance with the demands of European standard (ES) were conducted in Lithuania.

### Example 1

The batches of the road concrete mix of the «A» type, brand 1, each weighting 2000kg (the total weight 250 tones) were prepared.

The modified road mineral component of a road concrete mix was prepared in the following manner.

Initially the mineral component of a road concrete mix was prepared by blending the crushed stone, sand, and mineral powder at a temperature of 140-150°C, afterwards a bitumen heated up to a temperature of 140-150°C was introduced into said mineral component of a road concrete mix, whereas a modifying composition was introduced directly into a mixer during the feeding of a bitumen. The batches of a road concrete mix wherein the content of a modifying composition was equal to 16 kg and 20 kg; i.e. 0.8% and 1.2%, accordingly, of the weight of the mineral constituent of the road asphalt mix, were prepared. The formulation and the relation of the components of a modifying composition are given below.

The temperature of preparation of the road concrete mix with the modifying composition was equal to 147-150°C. The road concrete mix without the modifying composition was prepared in a similar way. The time of preparation of the road concrete mixes with- and without modifier (conventional mix) was equal to 25 sec.

The modifying composition was obtained through the mixing of the components. The formulation of the modifying composition and the relation of its components (per total amount of 16 kg) are give below:

| | |
|---|---|
| active rubber powder with the specific surface area | 0,63 m²/g |
| and particle size 0.1-0.8mm | 11 kg (68.75 wt.%) |
| metasilicate with a needle-shaped structure | 4.0 kg (25.0 wt.%) |
| initiator of gelation, N-nitrosodiphenilamine | 0.18 kg (1.12 wt.%) |
| structurizing agent, epoxy ether resin of a trade name «E-40» or the like | 0.34 kg (2.13wt.%) |
| structurizing agent - resin trade name "jarresin B" (epoxy resin of a phenol-formaldehyde type ) | 0.48 kg(3.0 wt.%) |
| Total: | 16.0 kg (100 wt.%) |

The modifying composition did not possess any agglomerated components.

An active rubber powder was produced through the thermomechanical grinding of the vulcanized rubber in the presence of fluorine-containing alcohol-telomer which have the general structural formula H(CF₂CF₂)nCF₂OH where n=8 (antiagglomerator) in amounts of 0.3% of the weight of vulcanized rubber.

Table 1 presents the test results for asphalt concrete of the «A» type without the modifier (conventional asphalt concrete) and for the asphalt concrete containing the modifier in amounts 0.8wt.% and 1.2 wt.% of the weight of the mineral constituent of the road concrete mix.

**Table 1**

| Point number | Characteristic | | Conventional asphalt concrete | Modified asphalt concrete | | Demands according to GOST 9128-97 |
|---|---|---|---|---|---|---|
| | | | | 0.8 wt.% | 1.2 wt.% | |
| 1. | Average density, g/cm³ | | 2.71 | 2.68 | 2.69 | - |
| 2. | Porosity of mineral basis, vol.%, no more than | | 14.5 | 12.2 | 12.3 | 19 |
| 3. | Residual porosity, vol.% | | 4.7 | 3.1 | 3.3 | 2.5 - 5.0 |
| 4. | Water saturation, vol.% | | 3.8 | 2.3 | 2.5 | 2.0 - 5.0 |
| 5. | Ultimate compression strength, MPa, at temperatures: | | | | | |
| | | 20°C, no less than | 3.1 | 3.3 | 3.8 | 2.5 |
| | | 50°C, no less than | 1.0 | 1.1 | 1.5 | 1.0 |
| | | 0°C, no more than | 9.8 | 8.2 | 8.6 | 11.0 |
| 6. | Water resistance, no less than | | 0.95 | 1.0 | 1.15 | 0.9 |
| 7. | Water resistance at long-term water saturation, no less than | | 0.87 | 0.89 | 0.96 | 0.85 |
| 8. | Cohesion of bitumen with mineral component of road concrete mix | | Stand the test | Stand the test | Stand the test | Stand the test |
| 9. | Specific effective activity, Bq/kg | | - | 364 | 416 | Up to 740 |
| 10. | Shear stability, no less than | | 0.91 | 0.94 | 0.98 | 0.87 |
| 11. | Crack growth resistance, MPa | | 3.2 | 4.2 | 4.4 | 3.0 - 6.0 |

### Example 2

The road concrete mixes of the «B» type with the content of the modifying composition in amounts 1wt.% and 1.5wt.% of the weight of the mineral constituent of the road concrete mix, were prepared.

The formulation of the modifying composition (per the total amount of 10 kg): active rubber powder with the specific surface

| | |
|---|---|
| area 0.56-0.62 m²/g and particle size 0.1-0.8 mm | 7.4 kg (74.0 wt.%) |
| metacilicate of a needle-shaped structure | 2.0 kg (20.0 wt.%) |
| initiator of gelation, N-nitrosodiphenilamine | 0.1 kg (1.0 wt.%) |
| structurizing agent , epoxy ether resin with the reactive end groups, trade name «ED-8» or the like | 0.2 kg (2.0 wt.%) |
| structurizing agent - resin trade name "jarresin B" (epoxy resin of a phenol-formaldehyde type) | 0.3 kg (3.0 wt.%) |
| Total | 10kg (100 wt.%) |

The preparation of both the modifying composition and the road concrete mix was performed similar to Example 1. The active rubber powder was produced in the presence of antiagglomerator, whose denomination and the amount are specified in the Example 1.

Table 2 presents the test results for asphalt concrete of the «B» type without modifier (conventional asphalt concrete) and for asphalt concrete containing the modifier in amounts of 1wt.% and 1.5 wt.% of the weight of the mineral constituent of the road concrete mix.

**Table 2**

| Point number | Characteristic | | Conventional asphalt concrete | Modified asphalt concrete | | Demands according to GOST |
|---|---|---|---|---|---|---|
| | | | | 1.0 wt.% | 1.5 wt.% | |
| 1. | Average density, g/cm³ | | 2.4 | 2.3 | 2.37 | - |
| 2. | Porosity of mineral basis, vol.%, no more than | | 16.2 | 10.3 | 12.8 | 19 |
| 3. | Residual porosity, vol.% | | 4.9 | 3.8 | 4.3 | 2.5 - 5.0 |
| 4. | Water saturation, vol.% | | 2.9 | 1.5 | 1.76 | 1.5 - 4.0 |
| 5. | Ultimate compression strength, MPa, at temperatures: | | | | | |
| | | 20°C, no less than | 2.7 | 3.3 | 5.9 | 2.5 |
| | | 50°C, no less than | 1.1 | 1.3 | 2.5 | 1.2 |
| | | 0°C, no more than | 10.7 | 6.5 | 10.5 | 11 |
| 6. | Water resistance, no less than | | 0.91 | 0.92 | 1.03 | 0.90 |
| 7. | Water resistance at long-term water saturation, no less than | | 0.85 | 0.85 | 1.0 | 0.85 |
| 8. | Cohesion of bitumen with mineral component of road concrete mix | | Stand the test | Stand the test | Stand the test | Stand the test |
| 9. | Ultimate tensile strength at cleavage, MPa | | 3.8 | 4.3 | 5.0 | no less than 3.5 no more than 6.0 |

As is seen from the above results, the modified asphalt concrete is characterized by the small amount of open pores and high stability to the water impact. Besides, it possesses higher deformability and elasticity that enhances its performance both at positive and negative temperatures.

### Example 3

The trials were conducted in accordance with the ES standards. The formulation of the modifying composition was similar to that specified in Example 2. The content of the modifying composition was equal to 1.0 wt.% of the weight of the mineral constituent of the road asphalt mix.

The preparation of both the modifying composition and the road concrete mix was performed similar to Example 1. The active rubber powder was produced in the presence of antiagglomerator, whose denomination and the amount are specified in the Example 1. Table 3 presents the test results performed in accordance with the ES standards.

**Table 3**

| Point number | Characteristic | Magnitude of the characteristic | | Demands according to ES |
|---|---|---|---|---|
| | | Without modifier | With modifier | |
| 1. | Marshall stability, KN | 8.1 | 11.9 | ≥ 8 |
| 2. | Plasticity, mm | 5.1 | 4.1 | 2.5 - 4.5 |
| 3. | Relative elasticity, KN/mm | 1.6 | 2.3 | 2.3 |
| 4. | Residual porosity, % | 1.1 | 2.0 | 2.0 - 4.0 |
| 5. | Average density of asphalt concrete g/cm³ | 2.480 | 2.447 | - |
| 6. | Average density of mix, g/cm³ | 2.508 | 2.494 | - |
| 7. | Density of mineral constituent, g/cm³ | 2.741 | 2.723 | - |
| 8. | Density of bitumen, g/cm³ | 1.020 | 1.020 | - |
| 9. | Porosity of mineral constituent, VMA, % | 14.5 | 15.1 | - |

As the data of Table 3 suggest, the results of the trials performed in accordance with the ES demands, confirms the positive impact of the modifier on the properties of asphalt concrete; thus, the Marshall stability increases for more than 30%, the relative elasticity increases for more than 30%, and the residual porosity enhances also.

### Example 4

The trials of the poured asphalt concrete without modifier and with the proposed modifying composition in amounts of 1.51 wt.% and 3.5 wt.% of the weight of the mineral component of the road asphalt mix were conducted.

Formulation of modifier:

| | |
|---|---|
| active rubber powder with the specific surface area | 0.56-0.62m²/g |
| and particle size 0.1-0.8mm | 9.0 kg(90wt.%) |
| metasilicate with a needle-shaped structure | 0.4 kg(4 wt.%) |
| initiator of gelation, N-nitrosodiphenilamine | 0.43 kg(4.3wt.%) |
| structurizing agent, epoxy ether resin, trade name «E-40» | 0.17kg( 1.7wt.%) |
| Total | 10kg(100wt.%) |

The preparation of both the modifying composition and the road concrete mix was performed similar to Example 1. The active rubber powder was produced in the presence of ozokerite (antiagglomerator) in amounts of 2% of the weight of vulcanized rubber.

Table 4 presents the test results for the modified poured asphalt concrete and the non-modified poured asphalt concrete.

**Table 4**

| Content of modifier wt.% | Content of bitumen, % | Ultimate shear stress under vertical load, MPa | | | Structural cohesion, MPa | Angle of internal friction, degree |
|---|---|---|---|---|---|---|
| | | 2 | 5 | 8 | | |
| 0 | 11 | 0.16 | 0.33 | 0.505 | 0.045 | 29 |
| 1.51 | 11 | 0.28 | 0.42 | 0.58 | 0.18 | 32 |
| 3.5 | 11 | 0.39 | 0.59 | 0.72 | 0.27 | 34 |

The above results illustrate the sharp increase in the values of the structural cohesion of asphalt concrete and also the high value of the ultimate shear strength.

### Example 5

The trials of the modified stone mastic asphalt concrete were conducted. It is to be noted that, in contrast to the asphalt concretes considered in the above Examples, a stone mastic asphalt concrete possesses the particular structure that provide the necessary strength, density, and durability.

The formulation of the modifying composition was similar to that specified in Example 1, it's amount is equal to 0.5wt.% of the weight of the mineral constituent of the road asphalt mix.

The preparation of both the modifying composition and the road concrete mix was performed similar to Example 1. The active rubber powder was produced through the thermomechanical pulverizarion of the waste of mechanical rubber goods on the basis of ethylene-propylene rubber in the presence of antiagglomerator, whose denomination and the amount are specified in the Example 1.

The trials were conducted in accordance with the demands of GOST 31015-2002. Table 5 present the test results for the modified stone mastic concrete.

**Table 5**

| Average density, g/cm³ | | Water saturation % | Ultimate compression strength, MPa, at a specified temperature, °C | | |
|---|---|---|---|---|---|
| | | | 50 | 20 | 0 |
| 2.48 | | 2.2 | 1.4 | 3.6 | 8.0 |
| Demands in according to GOST 31015-2002 | - | 1 - 4 | ≥0.65 | ≥2.2 | - |

The introduction of the modifier provides the decrease in the value of the trickle index down to 0.05 for stone mastic asphalts, i.e. this value is about three times smaller as compared with that of the stone mastic asphalts modified by «VIATOP-66» (GOST 31015-2002), resulting in the absence of bitumen bleeding on the surface of asphalt concrete pavements and the enhancement of their performance.

### Example 6

The trials of the effect of the proposed modifier on the quality and the operating life of the asphalt concrete pavements were conducted. For this purpose the samples of the asphalt concretes of type «A», brand1, without modifier and with the proposed modifier, whose formulation being equal to that in the Example 1, cut out the kerns, were tested. The amount of modifier was equal to 0.8 wt.% of the weight of the mineral constituent of the road asphalt mix. The trials of asphalt concrete pavements were conducted by the sampling 6 month and 12 months later the pavement was overlaid. The tests were performed for both the samples cut out the kerns and re-formatted samples produced from the initial (non re-formatted) ones. The selected samples were tested in accordance with GOST 9128-97 and SNiP 3.06.03-85.

Tables 6.1 and 6.2 presents the test results for the samples cut from the asphalt concrete of «A» type, brand 1( non re-formatted ones) and for the re-formatted samples with the proposed modifier and without it.

**Table 6.1.**

| Non re-formatted samples | | | Re-formatted samples | | | | | Content of modifier wt.% |
|---|---|---|---|---|---|---|---|---|
| Characterisics | | | Characteristics | | | | | |
| Average density, g/cm³ | Water saturation, vol.% | Compression ratio | Average density, g/cm³ | Water saturation vol.% | Ultimate compression strength, MPa, at temperature | | Water resistance | |
| | | | | | 20°C | 50°C | | |
| 2.64-2.70 | 1.5-2.1 | 0.99-1.01 | 2.67- 2.69 | 1.5-1.6 | 4.0-4.3 | 1.5-1.7 | 0.92-0.96 | 0.8 |
| 2.66-2.71 | 1.7-2.5 | 0.99-1.01 | 2.68-2.71 | 1.7-2.7 | 3.5-3.8 | 1.4-1.5 | 0.96-0.98 | 0 |

**Table 6.2**

| Characteristic | Characteristic value | | Demands in accordance with GOST 9128-97 |
|---|---|---|---|
| | With modifier | Without modifier | |
| Shear stability: | | | |
| Cohesion under shear action at 50°C, | | | |
| MPa | 0.29 - 0.30 | 0.26 | 0.25 |
| Coefficient of internal friction | 0.95 - 0.97 | 0.96 | 0.87 |
| Crack growth resistance by ultimate strength at cleavage at 0°C | 3.5 - 3.6 | 3.0 | 3.5 - 6.0 |
| Frost resistance, R₂₀/R_{fr25} | 0.86 - 0.87 | 0.82 | - |
| Water saturation, % | 3.3 - 3.5 | 3.8 | - |

The trials of asphalt concrete pavement performed by sampling within 6 month and 12 months after the paving, revealed the top condition of the pavement overlaid with the modified asphalt concrete.
The comparison of strength properties of asphalt concretes clearly demonstrates the tendency for an increase in the ultimate compression strength for samples with the modifier, which is due to its active structurizing effect on a bitumen.
Moreover, the increased value of cohesion under shear action of the modified asphalt concreted favors the shear stability of a pavement and reduces the possibility of rutting.

### Example 7

The trials were conducted a year later the paving of the asphalt concrete of the «B» type without modifier and with the modifier in amounts of 1.0 wt.% of the weight of the mineral constituent. The formulation of the modifying composition in similar to that specified in the Example 2. Both the samples cut out the initial kerns (non re-formatted samples) and the re-formatted samples were tested. The test results are presented in Tables 7.1. and 7.2.

**Table 7.1**

| Non re-formatted Samples | | | Re-formatted samples | | | | | Compression ratio (coefficient of consolidation) | Content of modifier, wt.% |
|---|---|---|---|---|---|---|---|---|---|
| Actual thickness of layer, cm | Average density g /cm³ | Water saturation, vol.% | Average density, g/cm³ | Water saturation, vol% | Ultimate compression strength at temperatures | | Water stability | | |
| | | | | | 20°C | 50°C | | | |
| 5.7 | 2.50 | 1.9 | 2.49 | 3.8 | 3.5 | 1.1 | 0.98 | 1.0 | 0 |
| 5.6 | 2.48 | 0.9 | 2.47 | 1.7 | 4.4 | 1.8 | 0.98 | 1.0 | 1.0 |

As is seen from the above results, the introduction of modifier into the «B» type asphalt concrete favors the sharp decrease in water saturation and the increase in its strength at 20° and 50°C.

**Table 7.2**

| Characteristic | Characteristic value of asphalt concrete | | |
|---|---|---|---|
| | Content of modifier, wt.% | | Demands in accordance with GOST 9128 - 97 |
| | 0 | 1.0 | |
| Shear stability: | | | |
| Cohesion under shear action at 50°C, MPa | 0.35 | 0.42 | 0.37 |
| Coefficient of internal friction | 0.80 | 0.82 | 0.81 |
| Crack growth resistance by ultimate strength at clearage at 0°C | 2.9 | 3.5 | 3.0 - 6.5 |
| Frost resistance, R₂₀/R_{fr25} | 0.75 | 0.86 | - |
| Water saturation, % | 5.0 | 3.0 | - |

The above results confirm the effectiveness of the usage of the proposed modifier at the expense of active structure-forming effect and sharp decrease in water saturation of an asphalt concrete.

### Example 8

The trials of the samples cut out the kerns taken from the upper layers of pavements paved by crushed stone mastic mixes («SHMA-15») comprising the modifying composition similar to that specified in the Example 1, were conducted. The amount of modifying composition was equal to 0.5wt.% of the weight of mineral constituent of a road concrete mix. The similar trials were conducted for the mixtures with the modifier «VIATOP-66». The trials for the samples cut out the kerns and then re-formatted, were conducted also.

Table 8.1 presents the test results for the samples cut out the kerns from the upper layer of pavements with the above-mentioned crush stone mastic asphalt concrete mixes, whereas the Table 8.2 presents the physical-mechanical properties of the samples re-formatted from the cuttings from kerns.

**Table 8.1**

| Characteristic | Characteristic value for cutting with the additive | |
|---|---|---|
| | Proposed modifier | «VIATOP-66» |
| Average density g/m³ | 2.54 | 2.56 |
| Water saturation, % | 2.6 | 2.7 |

**Table 8.2**

| Point number | Characteristic | Characteristic value for cutting with the additive | |
|---|---|---|---|
| | | Proposed modifier | «VIATOP-66» |
| 1. | Average density, g/cm³ | 2.55 | 2.57 |
| 2. | Water saturation, % | 2.2 | 2.1 |
| 3. | Ultimate compression strength, MPa, at temperature: | | |
| | 20°C | 2.9 | 2.8 |
| | 50°C | 1.1 | 1.0 |
| 4. | Shear stability: | | |
| | Cohesion under shear action at 50°C, MPa | 0.19 | 0.18 |
| | Coefficient of internal friction | 0.95 | 0.95 |
| 5. | Crack growth resistance by ultimate strength at cleavage at 0°C, MPa | 3.9 | 4.1 |
| 6. | Water resistance at prolonged water saturation | 0.88 | 0.87 |
| 7. | Frost resistance: | | |
| | Frost resistance coefficient | 0.86 | 0.80 |
| | Water saturation, % | 3.9 | 4.3 |
| 8. | Trickle index | 0.02 | 0.12 |

It is to be noted that, on the whole, the values of physical-mechanical parameters for the cuttings from the kerns of stone matrix with the proposed composition and the "VIATOP-66" composition are close, except for the substantial improvement of the trickle index and the frost resistance coefficient for asphalt concrete with the proposed composition.

Basing on the above results, it may be concluded the proposed composition positively effects on the performance of the asphalt concrete pavement.

### Example 9.

The trials of the asphalt concrete with the modifying composition, whose formulation and amount are specified in the Example 2, were conducted. The antiagglomerator, in whose presence the activate rubber powder was produced and it's amount are specified in the Example 1. The process for introduction of the modifying composition into the road concrete mix is also specified in the Example 1.

Table 9 presents the comparison test data for asphalt concrete with the proposed modifier and the modifier according the Russian Federation patent 2196750(prototype).

**Table 9**

| Point number | Characteristic | Physical-mechanical characteristic of asphalt concrete | |
|---|---|---|---|
| | | With the proposed modifier | Prototype, composition 4 |
| 1. | Ultimate compression strength, MPa, at temperatures : | | |
| | 20°C | 5.9 | 5.2 |
| | 50°C | 2.2 | 1.6 |
| | 0°C | 6.8 | 11.2 |
| 2. | Water resistance coefficient | 1.02 | 0.82 |
| 3. | Shear stability | 0.96 | 0.87 |

As is seen from the Table 9, the physical-mechanical properties, water resistance coefficient, and shear stability of the asphalt concrete with the proposed modifier exceed those of the asphalt concrete with the prototype modifier.

In view of the fact that at present time the standardized methodology for the prediction of service life of pavements is absent, in Table 10 some comparative data on the characteristics of asphalt concrete pavements responsible for their services life, are presented.

**Table 10**

| Characteristic, type of asphalt concrete | Characteristic's value | | | |
|---|---|---|---|---|
| | Asphalt concrete without modifier | Asphalt concrete with the proposed modifier | Change in characteristic's value, % | Demands according to GOST |
| Frost resistance: | | | | |
| Type B | 0.75 | 0.86 | + 14.6 | - |
| Type A | 0.82 | 0.86 | + 5.0 | - |
| SMA | 0.80 | 0.86 | + 7.5 | - |
| Shear resistance: Cohesion at shear, MPa | | | | No less than |
| Type B | 0.35 | 0.42 | + 20.0 | 0.37 |
| Type A | 0.26 | 0.295 | + 13.0 | 0.25 |
| SMA | 0.18 | 0.19 | - | 0.18 |
| Trickle, % | | | | No more than 0.20 |
| SMA | 0.12 | 0.02 | + 90.0 | |

The usage of the proposed composition and the process for the preparation of road concrete mix provide the gain in performance of various types of asphalt concretes. The totality of the above results confirm the efficiency in application of the proposed modifying composition for all the road concrete mixes which is due to its active structurizing effect on bitumen. The above test results for the asphalt concretes of the basis of SMA illustrate the effect of the usage of the proposed modifier manifesting itself in the substantial decrease in the parameter "trickle", the disappearance of bitumen spots that, finally, leads to the increase in the adhesion of wheels with the pavement. The trial data on the compacted modified road asphalt mixtures evidence for the improvement of the parameters "structural cohesion" responsible for shear stability of a pavement and reduce of rutting. The increase in the frost resistance coefficient in modified asphalt concretes attests about the decrease in the strength loss of a pavement under the action of alternating (from -20°C up to +20°C) temperatures; the latter has to lead to increase in a service life of a surface coarse of a pavement in operation in a moderate climate zone.

Basing on the performed trials, one can assume that for the pavements comprising the proposed modifying composition and produced by the proposed process, the performance of asphalt concretes enhances substantially due to the formation of a three-dimensional rubber structure in bitumen and the increase of adhesion between the bitumen and the mineral components; accordingly, the service life of the pavements increases also as compared to the conventional pavements (by preliminary estimates, their service life rises no less than 30%).

Besides, as the trials revealed, both the modifying composition and the rubber powder which is its constituent do not show any tendency to agglomeration in its storage in the course of a year.

When using the proposed modifying composition for road concrete mixes, the introduction of this composition into a mix is fulfilled directly in the process of a road asphalt mix preparation.

As is seen from the above results, the usage of the modifying composition offers the increase in strength and frost resistance as well as the stability to cyclic loadings and the "structural cohesion" of asphalt concretes; the totality of the above factors favors the durability of the service life of pavements.

## Claims

1. A modifying composition for road concrete mixes comprising a pulverized vulcanized rubber, wherein said composition comprises as the pulverized vulcanized rubber an active rubber powder with the particle size no more than 0.8mm and the specific surface area no less than 0.5m²/g produced through the thermomechanical grinding of said vulcanized rubber in the presence of an antiaggromerator selected from the group including paraffin, ozokerite and halogenated alcohol-telomers in amounts 0.1-2.0% of the weight of vulcanized rubber, said composition comprises additionally:
metasilicate of a needle-shaped structure, initiators of gelation selected from the group including 4-nitro-N-methylaniline, N-methyl-N,4-dinitrosoaniline, N-(2-methyl-2-nitropropyl)-4-nitrosoanilyne, N-nitrosodiphenilamine, and at least one structurizing agent with the increased induction period of structurization selected from the group including oligomeric epoxy ether resin, poxy resin with reactive end groups, polycondensation resin promoting the formation of branched or network structures, with the following component ratio, wt.%,
| | |
|---|---|
| active rubber powder | 65-90 |
| metasilicate of a needle-shaped structure | 4.0-25.0 |
| initiators of gelation | 1.0- 4.5 |
| structurizing agent or structurizing agents | 1.7-6.0 |

2. A composition according to claim 1 wherein said composition comprises as said active rubber powder, a rubber powder produced through thermomechanical griding of the worn-out tires and the waste of mechanical rubber goods.

3. A composition according to claims 1 or 2 wherein said composition comprises as said active rubber power, a rubber powder produced through thermomechanical grinding of vulcanized rubber on the basis of natural, isoprene, butadiene-styrene, and ethylene-propylene rubbers.

4. A composition according to claim 1 wherein said composition comprises as said active rubber powder a rubber powder produced through thermomecanical grinding of vulcanized rubber in the presence of fluorine-containing alcohol-telomers which have the general structural formula H(CH₂CH₂)nCF₂OH, where n≥5.

5. A composition according to claim 1 wherein said composition comprises as said structural agent with the increased induction period, the structural agent with the induction period of structurization no less than 30 minutes at a temperature of 160°C.

6. A composition according to claim 1 wherein said composition comprises as said oligomeric epoxy ether the resin with a trade name «ARE», «E-40» or the like, as the epoxy resin with reactive end groups, the epoxy resin with a trade name «ED-8» or the like, and as the polycondensation resin it comprises a resin of phenol-formaldehyde type promoting the formation of branched or network structures.

7. A process for preparation of a modified road concrete mix comprising the mixing of crushed stone, sand, and mineral powder at elevated temperature, and introduction of bitumen and said modifying composition, wherein the components of a mineral constituent of said mix, namely, crushed stone, sand, and mineral powder are blended initially at a temperature of 140-150°C, and only afterwards a bitumen heated up to a temperature of 140-150°C is added to said mix, simultaneously with the bitumen's addition or immediately after it said modifying composition in amounts of 0.32-3.5 wt.% of the weight of the mineral constituent of said road concrete mix is introduced at a temperature of 150-180°C; the composition consisting of the following components, is used herein as said modifying composition:
A) active rubber powder with the particle size no more than 0.8 mm and the specific surface area no less than 0.5 m²/g produced through the thermomechanical pulverization of vulcanized rubber in the presence of antiagglomerator, selected from the group including paraffin, ozokerite, and halogenated alcohol-telomers in amounts of 0.1-2.0 % of the weight of vulcanized rubber,
B) metasilicate of a needle-shaped structure,
C) initiator of gelation selected from the group, including 4-nitro-N-metilanilin, N-methyl-N , 4-dinitrosoaniline, N-(2-methyl-2-nitropropyl)-4-nitrosoanilin, N-nitrosodiphenilamine,
D) at least one structurizing agent with the increased induction period of structurization selected from the group, including oligomeric epoxy ether resin, epoxy resin with reactive end groups, polycondensation resin promoting the formation of branched or network structures, with the following component ratio, wt.%:
| | |
|---|---|
| active rubber powder | 65-90 |
| metasilicate of a needle-shaped structure | 4.0-25.0 |
| initiator of gelation | 1.0 - 4.5 |
| structurizing agent or structurizing agents | 1.7-6.0 |

8. A process according to claim 7 wherein the rubber powder produced through the thermomechanical grinding of the worn-out tires and the waste of mechanical rubber goods is used in said modifying composition as said active rubber powder.

9. A process according to claim 7 or claim 8 wherein the rubber powder produced through the thermomechanical grinding of vulcanized rubber on the basis of natural, isoprene, butadiene-styrene and ethylene-propylene rubbers is used in said modifying composition as said active rubber powder.

10. A process according to claim 7 wherein the rubber powder produced through the thermomechanical grinding of vulcanized rubber in the presence of fluorine-containing alcohol-telomers which have the general structural formula H(CF₂CF₂)nCF₂OH, where n≥5 is used in said modifying composition as said active powder.

11. A process according to claim 7 wherein the structurizing agent with the induction period of structurization no less than 30 minutes at a temperature 160°C is used in said modifying composition as the structural agent with the increased induction period.

12. A process according to claim 7 wherein the resin with a trade name «ARE», «E-40» or the like is used as said oligomeric epoxy ether resin, the epoxy resin with a trade name «ED-8» or the like is used as the epoxy resin with reactive end groups, and a resin of phenol-formaldehyde type is used as the polycondensation resin promoting the formation of branched or network structures, are used in said modifying composition.
